# FASCICULE DE BREVET EUROPEEN

(11) **EP 2 320 776 B1**
(45) Date de publication et mention de la délivrance du brevet: **20.06.2012**
(21) Numéro de dépôt: 09740488.3
(22) Date de dépôt: 24.08.2009
(51) Int. Cl.: A47J 36/02

(54) **ARTICLE CULINAIRE COMPORTANT UN REVÊTEMENT ANTIADHÉSIF À PROPRIÉTÉS AMÉLIORÉES D'ANTI-ADHÉRENCE**
KULINARISCHER ARTIKEL MIT EINER ANTIHAFTBESCHICHTUNG MIT VERBESSERTEN ANTIHAFTEIGENSCHAFTEN
CULINARY ARTICLE COMPRISING A NON-STICK COATING HAVING IMPROVED NON-STICK PROPERTIES

(30) Priorité: 29.08.2008 FR 0855830
(43) Date de publication de la demande: 18.05.2011
(73) Titulaire: Seb S.A., 69130 Ecully (FR)
(72) Inventeur: LE BRIS, Stéphanie, 73190 Challes-les-Eaux (FR); DUBANCHET, Aurélien, 73100 Grésy sur Aix (FR); PERILLON, Jean-Luc, 26130 Saint-Paul-Trois-Châteaux (FR)
(74) Mandataire: Novagraaf Technologies
(86) Numéro de dépôt international: PCT/FR2009/051621
(87) Numéro de publication internationale: WO 2010/023402

(56) Documents cités:
- EP-A- 0 515 705

## Description

La présente invention concerne de manière générale des articles culinaires comportant un revêtement antiadhésif, et plus particulièrement des articles culinaires dont la face intérieure est recouverte d'un revêtement antiadhésif de type vitreux présentant des propriétés améliorées d'anti-adhérence.

La présente invention concerne également un procédé de fabrication d'un tel article culinaire.

Par revêtement du type vitreux, on entend au sens de la présente invention un revêtement qui a l'apparence du verre ou d'un émail, qui peut être soit organo-minéral, soit entièrement minéral ;

Par revêtement vitreux organo-minéral, on entend au sens de la présente invention, un revêtement constitué d'un matériau de type sol-gel (c'est-à-dire obtenu par voie sol-gel) dont le réseau est essentiellement inorganique, mais qui comporte des groupements organiques, notamment en raison des précurseurs utilisés et de la température de cuisson du revêtement.

Par revêtement entièrement minéral, on entend, au sens de la présente invention, un revêtement constitué d'un matériau entièrement inorganique, exempt de tout groupement organique. Un tel revêtement peut également être obtenu par voie sol-gel avec une température de cuisson d'au moins 404 °C, ou à partir de précurseurs de type tétraéthoxy-silane (TEOS) avec une température de cuisson qui peut être inférieure à 400°C.

Par revêtement présentant des propriétés améliorées d'anti-adhérence, on entend au sens de la présente invention un revêtement qui est facilement nettoyable et qui permet de cuire des aliments avec peu, voire pas du tout de matière grasse. Un tel revêtement est donc apte à résister à l'adhérence, notamment après cuisson, de substances de dégradation des huiles, des graisses ou de manière générale des aliments.

Dans le domaine des revêtements antiadhésifs de type vitreux destinés à des ustensiles culinaires, on connaît déjà les revêtements à base d'émail, mais ceux-ci ne garantissent pas une bonne anti-adhérence, et nécessitent des températures de vitrification élevées (supérieures à 540°C).

On connaît également les revêtements sol-gel, notamment ceux obtenus à partir d'alcoxydes métalliques à base de silice (silanes) ou à base d'alumine (aluminates). Toutefois, de tels revêtements ne permettent pas de déposer une épaisseur importante et faïencent généralement pour des épaisseurs de l'ordre de 10 microns. En outre, leur cohésion n'est achevée que si des températures élevées sont appliquées pendant des durées longues, par exemple des températures supérieures à 400°C pendant au moins trente minutes. Par contre ce type de revêtement permet d'envisager une gamme d'utilisation en température plus importante que celles des revêtements à base de PTFE, qui peut notamment aller jusqu'à 600°C, au lieu de 300°C au maximum pour des revêtements à base de PTFE.

Cependant, de tels revêtements présentent l'inconvénient de présenter des propriétés d'anti-adhérence non seulement limitées, mais peu durables, ce qui les rend difficilement applicables en tant que revêtements recouvrant la face intérieure du fond d'un article culinaire.

Pour remédier à ces problèmes, il est connu de l'homme du métier d'ajouter des éléments fluorés, en particulier des silanes fluorés, dans des revêtements sol-gels obtenus par condensation de silanes. Ainsi, la demande de brevet européen EP 1 835 002 décrit des revêtements antiadhésifs qui comprennent une couche de base appliquée sur un substrat et une couche supérieure appliquée sur la couche de base. La couche de base est composée d'une matrice à base de silice, résultant de la condensation d'un organo-alcoxysilane et d'un sol de silice colloïdale. La couche supérieure est également composée d'une matrice à base de silice résultant de la condensation d'un organo-alcoxysilane avec un sol de silice colloïdale, mais avec la particularité que l'organo-alcoxysilane comporte en outre une faible quantité d'un fluoroalcoxysilane (FAS).

Toutefois, l'incorporation de silanes fluorés dans des revêtements de type sol-gel présente l'inconvénient que ces composés sont non seulement couteux et sont de stabilité thermique limitée, ce qui est préjudiciable à leur maintien dans le film, en particulier en cas d'étuvage à température élevée. En effet, le départ du fluor ne peut être évité, ce qui ne les distingue plus des revêtements sol-gel non modifiés en raison de la disparition des segments moléculaires fluorés favorables à l'anti-adhérence.

Par ailleurs, il est connu de l'homme de l'art de structurer macroscopiquement la surface de la face intérieure d'un article culinaire qui est revêtu d'un revêtement organique à base de résine fluorocarbonée, notamment de type PTFE. L'utilisation d'un tel fonds structuré permet en effet d'améliorer les propriétés anti-adhérence de ce type de revêtement. Ainsi, les brevets de MEYER EP 0259056 et EP 0515705 (support en aluminium anodisé) décrivent des ustensiles culinaires dont la surface interne destinée à être en contact avec les aliments est réalisée avec des ondulations qui délimitent des crêtes très rapprochées, formant ainsi une surface ondulée sur laquelle est appliqué un matériau antiadhésif tel que du PTFE.

Toutefois, cette solution n'est que très peu, voire pas du tout utilisée parce que la résistance à l'abrasion en particulier au niveau des arêtes du relief est très faible. En effet, étant donné qu'il s'agit d'une zone particulièrement sollicitée, on observe l'apparition de zones non revêtues, et ce même après un usage limité de l'ustensile, ce qui nuit gravement aux propriétés d'anti-adhérence de la surface interne de l'article.

Les revêtements de type sol-gel tels que ceux obtenus à partir d'alcoxydes métalliques présentent, par rapport aux revêtements fluorocarbonés de type PTFE, une meilleure résistance à l'abrasion, ce qui est un gage d'une plus grande durabilité au niveau de la tenue aux arêtes. Cependant, les revêtements sol-gel possèdent des propriétés d'anti-adhérence très limitées.

Par conséquent, l'homme du métier connaissant les brevets MEYER ci-dessus mentionnés serait naturellement conduit à utiliser des fonds structurés pour améliorer les propriétés d'anti-adhérence de tels revêtements. Toutefois, étant donné que ces formulations sol-gel sont très fluides par nature, on observe très facilement que dans le cas d'un fond structuré, la couverture des arêtes du relief reste plus fine que pour le reste de la surface.

Pour améliorer cette couverture des arêtes du relief, en particulier au niveau des arêtes, il est connu de l'homme du métier d'épaissir la formulation du revêtement au moyen d'un agent épaississant de nature organique. Les agents les plus utilisés dans le cadre des sol-gels sont souvent des gommes xanthanes, mais peuvent aussi être des dérivés de cellulose ou des polymères acryliques. Ces agents organiques répondent bien à la fonction d'épaississant et permettent d'obtenir des couvertures d'arêtes qui soient homogènes. Toutefois, ces agents épaississants organiques perturbent la constitution du réseau inorganique formé, nuisant ainsi gravement aux propriétés mécaniques du film. En effet, lors de la cuisson du film, ces agents organiques sont progressivement détruits, leurs produits de dégradation volatiles perturbant le réseau en formation et créant des lacunes dans ce même réseau. Il s'ensuit que la cohésion et la solidité du film formé sont affectées. On n'obtient donc pas la dureté espérée en utilisant de tels revêtements.

En outre, si les températures de cuisson du revêtement sont maintenues basses (ce qui peut constituer un avantage des revêtements de type sol-gel, notamment de nature organo-minérale), on observe une accumulation de défauts dans la structure du matériau sol-gel formé.

Enfin, dans le cas des applications culinaires, l'un des intérêts majeurs des revêtements de type sol-gel étant lié à la possibilité d'être utilisés à des températures très élevée, par exemple égales ou supérieures à 300°C, il y a un risque de dégradation chez l'utilisateur.

Or, la demanderesse a maintenant trouvé que l'utilisation d'épaississants inorganiques dans des revêtements de type vitreux, permettait de remédier à ce problème de couverture homogène des arêtes d'un fond structuré.

Plus particulièrement, la présente invention a pour objet un article culinaire présentant des propriétés d'anti-adhérence améliorées, comprenant un support présentant une face intérieure pouvant recevoir des aliments et une face extérieure destinée à être disposée vers la source de chaleur, la face intérieure étant revêtue d'un revêtement antiadhésif de type vitreux et exempt de PTFE, caractérisé en ce que :
■ le revêtement antiadhésif se présente sous forme d'un film continu ayant une épaisseur d'au moins 10 µm et qui est constitué d'un matériau sol-gel comprenant une matrice d'au moins un polyalcoxylate métallique, au moins 5% en poids par rapport au poids total du revêtement d'au moins un oxyde métallique colloïdal dispersé dans ladite matrice, et 0,01% à 10% en poids par rapport au poids total du revêtement d'au moins un épaississant inorganique, et
■ la face intérieure du support est structurée macroscopiquement de manière à présenter un relief avec des variations locales du niveau de la surface d'une ampleur comprise entre 100 µm et 5000 µm.

La structuration de la face intérieure recouverte du revêtement antiadhésif permet non seulement d'améliorer les propriétés d'anti-adhérence du revêtement, mais aussi et surtout d'en augmenter la durabilité.

Ainsi, toutes choses étant égales par ailleurs (notamment les propriétés hydrophobes et celles de résistance mécanique du revêtement antiadhésif), un article culinaire dont la face intérieure est revêtue d'un revêtement vitreux présentera une diminution de son anti-adhérence beaucoup plus rapide lors des tests de cuisson de divers aliments si sa surface est lisse, par rapport au même article dont la face intérieure a été structurée conformément à la présente invention.

Le relief de la face intérieure peut consister en une pluralité de nervures régulièrement espacées, de préférence circulaires et concentriques, ou en une spirale, ou encore en une pluralité d'alvéoles.

Dans le cas d'un relief de type « alvéoles », ces derniers peuvent être de forme régulière ou non, disposés ou non de manière régulière, et de densité constante ou non. En particulier les alvéoles peuvent être des polyèdres disposés régulièrement de manière à donner à la face intérieure du support l'apparence d'un nid d'abeilles. Ces alvéoles peuvent aussi être de forme circulaire et être disposées de manière à donner à la surface de la face intérieure du support l'apparence d'une balle de golf. Enfin, les alvéoles peuvent aussi être des vallons de forme irrégulière donnant à la face intérieure du support un effet bosselé ou un effet « cuir » suivant la taille du motif. La densité de ces alvéoles peut ne pas être constante sur toute la face intérieure de l'article. Par exemple, le motif peut être plus resserré sur le fond de l'article que sur la jupe.

En ce qui concerne maintenant le revêtement recouvrant la face intérieure structurée, et en particulier le matériau sol-gel constitutif de ce revêtement, la matrice de ce matériau peut comprendre les produits de condensation de polyalcoxylates métalliques, par exemple un ou des polyalcoxysilanes, un aluminate, un titanate, un zirconate, un vanadate, un borate ou leurs mélanges.

D'une manière préférée, la matrice du revêtement selon l'invention comprend un polyalcoxysilane et/ou un aluminate de manière à constituer une matrice mixte.

Dans une variante de l'invention, la matrice du revêtement selon l'invention est greffée par un ou plusieurs groupements organiques choisis parmi les groupements alkyles en C₁-C₄ et les groupements phényle. Ces groupements sont nécessaires pour améliorer l'hydrophobicité du revêtement. Afin d'obtenir une meilleure stabilité thermique du revêtement, les chaînes courtes sont privilégiées dans le cadre de la présente invention. Le faible encombrement stérique des groupements alkyles en C₁-C₄ leur permet en outre d'être au moins en partie protégés d'une éventuelle dégradation thermique par le réseau inorganique.

De manière préférée, la matrice du revêtement selon l'invention est greffée par un ou plusieurs groupements méthyle, qui améliorent le caractère hydrophobe du revêtement sans gêner la formation du réseau inorganique.

Outre la matrice d'au moins un polyalcoxylate métallique, le revêtement vitreux selon l'invention comprend au moins 5% en poids, et de préférence de 5 à 30% en poids par rapport au poids total du revêtement d'au moins un oxyde métallique, qui est de préférence finement dispersé dans la matrice. Cet oxyde métallique se présente généralement sous forme colloïdale d'agrégats, dont la taille est inférieure à un micron, voire à 300 ou 400 nm.

A titre d'oxyde métallique colloïdal utilisable dans le revêtement antiadhésif selon l'invention, on peut notamment citer la silice, l'alumine, l'oxyde de cérium, l'oxyde de zinc, l'oxyde de vanadium, l'oxyde de titane et l'oxyde de zirconium. Les oxydes métalliques colloïdaux préférés sont la silice et l'alumine.

La présence d'oxyde métallique dans la matrice du revêtement selon l'invention permet d'obtenir un film d'une épaisseur suffisante, à savoir une épaisseur d'au moins 10 µm. Si l'épaisseur du revêtement est inférieure à 10 µm, la résistance mécanique du film formé est insuffisante.

Le revêtement vitreux comporte également 0,01% à 10% en poids par rapport au poids total du revêtement d'au moins un épaississant inorganique.

Les épaississants inorganiques ont une stabilité thermique telle que leur perte de poids (en dehors de l'eau de constitution ou d'hydratation) est inférieure à 1% après un chauffage de 3 heures à 300°C.

La présence d'un épaississant inorganique dans le revêtement sol-gel est nécessaire pour permettre une bonne couverture des arêtes du relief. En effet, cet épaississant sert essentiellement à régler la viscosité de la composition sol-gel avant sa solidification, et en second lieu à contrôler la brillance du revêtement sec final obtenu.

A titre d'épaississants inorganiques utilisables dans le cadre de la présente invention, on conseille les silices pyrogénées et les charges inorganiques lamellaires (notamment sous forme de feuillets).

Les épaississants inorganiques préférés dans le cadre de la présente invention sont les charges inorganiques lamellaires (notamment sous forme de feuillets).

Parmi les charges inorganiques lamellaires (sous forme de feuillets) utilisables dans le cadre de l'invention, on conseille la laponite®, le phosphate de zirconium, ou les argiles à structure de type feuillet (phyllo silicates) tels que la montmorillonite et le talc.

La charge inorganique lamellaire (sous forme de feuillets) préférée dans le cadre de la présente invention est la laponite®.

De préférence, le film a une épaisseur comprise entre 10 et 80 µm, et mieux entre 30 et 50 µm de sorte que la pellicule ainsi formée est continue, cohérente et suffisante pour absorber la rugosité du support.

De manière avantageuse, le matériau sol-gel constitutif du revêtement antiadhésif peut en outre comprendre au moins une huile de silicone pour améliorer le caractère hydrophobe de la surface du revêtement, et notamment après une agression thermique du type passage à la flamme.

En effet, le polyalcoxylate métallique présente des groupements hydrophobes qui sont détruits à haute température lors d'un passage à la flamme. Mais cette disparition du caractère hydrophobe est momentanée, car elle est progressivement compensée par l'huile de silicone piégée dans le polyalcoxylate et dont la migration en surface en quantités infinitésimales favorise la reconstitution progressive des groupements hydrophobes à la surface du film.

On observe qu'avec un revêtement selon l'invention comprenant au moins 0,1% en poids d'huile de silicone, la reconstitution du caractère hydrophobe est suffisante au moment d'une nouvelle cuisson. En effet, la valeur de l'angle de contact statique Θ d'une goutte d'eau déposée sur le revêtement de l'invention est de l'ordre de 20° après une agression thermique du type passage à la flamme. Cette valeur d'angle de contact statique remonte à au moins 75° après un processus de reconstitution des propriétés hydrophobes consistant en un réchauffage de la température ambiante à 200°C, sur une période d'au moins 5 minutes, c'est-à-dire lorsque l'ustensile est prêt pour une nouvelle cuisson.

De préférence, l'huile de silicone représente 0,1 à 6% en poids et mieux 0,3 à 5% en poids du poids total du revêtement (état sec). Au-dessous de 0,1% en poids d'huile de silicone, la reconstitution des groupements hydrophobes ayant disparu lors d'un passage à la flamme (600°C) est moindre, l'angle obtenu étant inférieur à 62°.

De manière davantage préférée, le matériau sol-gel du revêtement selon l'invention comprend 0.5 à 2% en poids d'huile de silicone par rapport au poids total du revêtement sec. Dans ce cas, l'angle de contact statique Θ initial d'une goutte d'eau déposée sur un tel revêtement est de 95°. Ce revêtement après une agression thermique du type passage à la flamme présente un angle de 20°. Après un processus de reconstitution comprenant au moins une étape de réchauffage de la température ambiante à 200°C sur une période d'au moins 5 minutes, l'angle de contact statique devient supérieur à 75° lorsque l'ustensile est prêt pour une nouvelle cuisson

Cette amélioration du caractère hydrophobe liée à la présence d'huile de silicones dans le revêtement vitreux contribue largement à l'amélioration des propriétés d'anti-adhérence du revêtement.

Le revêtement selon l'invention peut comprendre une huile silicone ou un mélange d'huiles silicones.

A titre d'huiles silicones utilisables dans le revêtement selon l'invention, on peut notamment citer les phényl silicones, les méthyl-phényl silicones et les méthyl silicones.

Si le revêtement selon l'invention est utilisé pour être en contact avec des aliments, on choisira de préférence une huile silicone de grade alimentaire, et en particulier une huile choisie parmi les méthyl-phényl silicones et les méthyl silicones de grade alimentaire.

A titre d'huiles méthyl-phényl silicones, on peut notamment citer les huiles non alimentaires commercialisées par la société WACKER sous la dénomination commerciale WACKER SILICONOL AP150 et par la société DOW CORNING sous la dénomination commerciale DOW CORNING 550 fluid, ainsi que les huiles alimentaires commercialisées par la société WACKER AR00. A titre d'huiles méthyl silicones, on peut notamment citer l'huile commercialisée par la société RHODIA sous la dénomination commerciale RHODIA 47 V 350, l'huile de la société WACKER 200 fluid, ou encore l'huile de la société TEGO ZV 9207, qui sont des huiles méthylsilicones de grade alimentaire.

De préférence, on utilisera une huile de silicone choisie parmi celles mentionnées ci-dessus, avec un poids moléculaire d'au moins 1000 g/mol, qui est non réactive et présente une viscosité comprise entre 20 et 2000 mPa.s.

De manière avantageuse, le matériau sol-gel du revêtement selon l'invention peut en outre comprendre des charges pour améliorer les propriétés mécaniques du revêtement formé, et/ou des pigments pour conférer de la couleur au revêtement. En outre, la présence de charges et/ou de pigments a également un effet bénéfique sur la dureté du film.

A titre de charges utilisables dans le revêtement selon l'invention, on peut notamment citer l'alumine, la zircone, le mica, les argiles (comme la montmorillonite, la sépiolite, la gypsite, la kaolinite et la laponite^{®}) et le phosphate de zirconium.

A titre de pigments utilisables dans le revêtement selon l'invention, on peut notamment citer le dioxyde de titane, les oxydes mixtes de cuivre-chrome-manganèse, les oxydes de fer, le noir de carbone, le rouge de pyralène, les aluminosilicates, les paillettes métalliques et notamment les paillettes d'aluminium.

De préférence, les charges et/ou les pigments sont sous forme de paillettes, ce qui présente l'avantage d'améliorer la dureté du revêtement antiadhésif.

De préférence, le pigment et/ou les charges sont de taille nanométrique, afin d'améliorer leur dispersion et leur répartition dans le revêtement, conférant à celui-ci une grande régularité de performance.

Dans une version avantageuse de l'article culinaire selon l'invention, le support est une calotte creuse d'un article culinaire, présentant un fond et une paroi latérale s'élevant à partir dudit fond.

Le support de l'article culinaire selon l'invention est réalisé en un matériau choisi parmi les métaux, le bois, le verre, les céramiques et les matières plastiques.

A titre de supports métalliques utilisables dans le procédé selon l'invention, on peut avantageusement citer les supports en aluminium ou en alliage d'aluminium, anodisé ou non, en acier inoxydable, en fonte, en fer, ou en cuivre.

Enfin, la présente invention concerne également un procédé de fabrication d'un article culinaire selon l'invention, ce procédé comprenant les étapes suivantes réalisées sur un support:
a) fourniture d'un support avec une première face destinée à constituer la face intérieure de l'article, et une face opposée à la première face et destinée à former la face extérieure ;
b) création d'un relief macroscopique sur la face destinée à constituer la face intérieure du support par une opération de frappe de manière à créer des variations du niveau de la surface pour obtenir une face intérieure structurée macroscopiquement ;
c) préparation d'une composition sol-gel comprenant :
   cl) préparation d'une composition aqueuse A comprenant 5 à 30% en poids par rapport au poids total de la composition aqueuse A d'au moins un oxyde métallique, et 0 à 20% en poids par rapport au poids de la composition A d'un solvant comprenant au moins un alcool, et 0,02 à 20 % en poids d'au moins un épaississant inorganique par rapport au poids de la composition A ;
   c2) préparation d'une solution B comprenant au moins un précurseur de type alcoxyde métallique ;
   c3) mélange de la solution B d'alcoxyde métallique avec la composition aqueuse A pour obtenir une composition sol-gel (A+B) avec 40 à 75% en poids de composition aqueuse A par rapport au poids de la composition sol-gel (A+B), de manière que la quantité d'oxyde métallique colloïdal représente 5 à 30% poids de la composition sol-gel (A+B) à l'état sec ;
d) application sur tout ou partie de la face intérieure structurée du support d'au moins une couche de la composition sol-gel (A+B) ayant une épaisseur d'au moins 20 µm à l'état humide, puis
e) cuisson de ladite couche de composition sol-gel pour obtenir un revêtement vitreux d'au moins 10 µm d'épaisseur.

Par face intérieure de l'article, on entend, au sens de la présente invention, la face destinée à être disposée du côté des aliments susceptibles d'être introduits dans l'article.

Par face extérieure de l'article, on entend, au sens de la présente invention, la face destinée à être disposée du côté d'une source de chaleur.

Avantageusement, la création de la structure macroscopique sur la face intérieure du support peut se faire par une opération de frappe. On utilise de préférence un support déjà préformé, c'est-à-dire un support présentant la forme finale de l'article culinaire. Mais, il est également possible d'utiliser un support plan tel qu'un disque. Dans ce cas, le procédé comprend une étape de mise en forme f) par emboutissage du disque pour lui conférer la forme finale de l'article culinaire.

Avantageusement, le relief comprend une pluralité de nervures ou d'alvéoles dont la profondeur est comprise entre 100 µm et 5 mm.

En ce qui concerne la préparation de la composition aqueuse A, il est nécessaire d'incorporer au moins 5% en poids d'au moins un oxyde métallique par rapport en poids total de la composition A pour former un film ayant après cuisson une épaisseur d'au moins 10 microns. Si par contre on a plus de 30% en poids par rapport au poids de la composition A, celle-ci n'est plus stable.

L'oxyde métallique de la composition aqueuse A est tel que défini ci-dessus, et de préférence choisi parmi la silice colloïdale et/ou l'alumine colloïdale.

L'épaississant inorganique de la composition aqueuse A est tel que défini ci-dessus, et de préférence choisi parmi les charges inorganiques lamellaires en feuillets telles que la saponite®. Cet épaississant a pour fonction de régler la viscosité de la composition sol-gel, ainsi que la brillance du revêtement sec.

La présence d'un solvant à base d'alcool est optionnelle, mais présente l'avantage d'améliorer la compatibilité de la composition aqueuse A avec la solution B d'alcoxyde métallique.

Il est toutefois possible de travailler sans solvant, mais dans ce cas le choix des polyalcoxylates est réduit à ceux présentant une excellente compatibilité avec l'eau. Une quantité excessive de solvant (supérieure à 20%), est possible, mais génère inutilement des composés organiques volatiles, ce qui n'est pas favorable pour l'environnement.

On utilise de préférence à titre de solvant dans la composition aqueuse A de l'invention un solvant alcoolique oxygéné ou un éther-alcool.

La composition aqueuse A selon l'invention peut également comprendre, outre l'oxyde métallique colloïdal et, le cas échéant, le solvant à base d'alcool, au moins une huile de silicone, qui est de préférence présente dans la composition A à raison de 0,05% à 3% en poids par rapport au poids total de la composition.

Avec une composition aqueuse A comprenant 0.5 à 2% en poids d'huile de silicone, on obtient un revêtement présentant des propriétés hydrophobes reconstituables dans le cadre d'un processus d'utilisation culinaire. L'huile de silicone de la composition A est une huile silicone de grade alimentaire définie ci-dessus.

La composition aqueuse A de l'invention peut également comprendre des charges et/ou des pigments, qui sont tels que définis ci-dessus.

En ce qui concerne la préparation de la solution B, on utilise de préférence à titre de précurseur un alcoxyde métallique choisi dans le groupe constitué par :
- les précurseurs répondant à la formule générale M₁(OR₁)ₙ,
- les précurseurs répondant à la formule générale M₂(OR₂)₍ₙ₋₁₎R₂', et
- les précurseurs répondant à la formule générale M₃(OR₃)₍ₙ₋₂₎R₃'₂, avec :
   R₁, R₂, R₃ ou R₃' désignant un groupement alkyle,
   R₂' désignant un groupement alkyle ou phényle,
n étant un nombre entier correspondant à la valence maximale des métaux M₁, M₂ ou M₃,
M₁ M₂ ou M₃ désignant un métal choisi parmi Si, Zr, Ti, Sn, Al, Ce, V, Nb, Hf, Mg ou Ln,

Avantageusement, l'alcoxyde métallique de la solution B est un alcoxysilane.

A titre d'alcoxysilanes utilisables dans la solution B du procédé de l'invention, on peut notamment citer le méthyltriméthoxysilane (MTMS), le tétraéthoxysilane (TEOS), le méthyltriéthoxysilane (MTES) et le diméthyldiméthoxysilane, et leurs mélanges, les alcoxysilanes préférés étant le TEOS et le MTMS.

Selon un mode de réalisation avantageux du procédé de l'invention la solution B peut comprendre un mélange d'un alcoxylane tel que défini ci-dessus et un alcoxyde d'aluminium.

Le précurseur de type alcoxyde métallique de la solution B est mélangé avec un acide organique, minéral, de Lewis qui représente 0,01 à 10% en poids du poids total de la solution B.

A titre d'acides utilisables pour mélanger avec le précurseur d'alcoxyde métallique, on peut notamment citer l'acide acétique, l'acide citrique, l'acéto-acétate d'éthyle l'acide chlohydrique ou l'acide formique.

Les acides préférés selon l'invention sont des acides organiques, et plus particulièrement l'acide acétique et l'acide formique.

Après la préparation de la composition aqueuse A et celle de la solution B de précurseur, on les mélange ensemble, pour former une composition sol-gel (A+B). Les quantités respectives de chacune des compositions A et B doivent être ajustées de manière que la quantité de silice colloïdale dans la composition sol-gel représente 5 à 30% en poids sur le sec.

La composition sol-gel (A + B) de l'invention peut être appliquée sur le support par pulvérisation ou par tout autre mode d'application, tel qu'au trempé, au tampon, au pinceau, au rouleau, par spin coating ou par sérigraphie. Cependant, dans le cadre d'un objet en forme, la pulvérisation par exemple au moyen d'un pistolet, présente l'avantage de former un film homogène et continu, qui, après cuisson, forme un revêtement continu, d'épaisseur régulière et étanche.

Après application de la composition sol-gel (A+B) selon l'invention, on procède généralement à un séchage, de préférence à 80°C, pendant 3 minutes.

En fonction de la nature du revêtement antiadhésif souhaité (organo-minéral ou entièrement minéral), la cuisson s'opérera :
- soit à une température supérieure à 400°C, et dans ce cas on obtient, quelle que soit la nature du précurseur, un revêtement entièrement minéral,
- soit à une température inférieure à 400°C, et de préférence entre 180 et 350°C, et dans ce cas on obtient un revêtement organo-minéral (sauf si le précurseur est un TEOS uniquement, car dans ce cas on aurait un revêtement complètement minéral, et ce, même à des températures de cuisson inférieures à 400°C).

A titre de support utilisable pour réaliser l'article culinaire selon l'invention, on utilisera avantageusement une calotte creuse telle que décrite précédemment, présentant un fond et une paroi latérale s'élevant à partir du fond.

Le support utilisable dans le cadre de la présente invention pourra avantageusement être réalisé un matériau choisi parmi les métaux, le bois, le verre, les céramiques et les matières plastiques.

A titre de supports métalliques utilisables dans le procédé selon l'invention, on peut avantageusement citer les supports en aluminium ou en alliage d'aluminium, anodisé ou non, en acier inoxydable, en fonte, en fer, ou encore en cuivre.

Le procédé selon l'invention peut en outre comprendre une étape de dépôt d'une couche d'émail sur la face opposée à celle revêtue d'un revêtement antiadhésif selon l'invention, cette étape de dépôt de la couche d'émail étant réalisée préalablement à celle du revêtement antiadhésif selon l'invention.

Outre les avantages mentionnés ci-dessus, le procédé conforme à l'invention est particulièrement simple de mise en oeuvre et peut facilement être envisagé sans bouleversement des processus de fabrication classique des articles culinaires.

D'autres avantages et particularités de la présente invention résulteront de la description qui va suivre, donnée à titre d'exemple non limitatif et faite en référence aux figures annexées :
- la figure 1 représente une vue schématique en coupe d'un article culinaire conforme à l'invention selon une première variante de réalisation (cercles concentriques),
- la figure 2 représente une vue schématique en coupe d'un article culinaire conforme à l'invention selon une deuxième variante de réalisation (nid d'abeilles grossier),
- la figure 3 représente une vue de dessus de la face intérieure de l'article culinaire représenté sur la figure 1 (cercles concentriques),
- la figure 4 représente une vue de dessus de la face intérieure de l'article culinaire représenté sur la figure 2 (nid d'abeilles grossier),
- la figure 5 représente une vue de dessus de la face intérieure d'un article culinaire conforme à l'invention selon une troisième variante de réalisation, avec un relief analogue à celui de l'article représenté sur les figures 2 et 4, mais en plus fin (nid d'abeilles fin),
- la figure 6 représente une vue de dessus de la face intérieure d'un article culinaire conforme à l'invention selon une quatrième variante de réalisation (« aspect cuir »),
- la figure 7 représente une vue schématique de dessus de la face intérieure d'un article culinaire conforme à l'invention selon une cinquième variante de réalisation (« vallons éparses »).

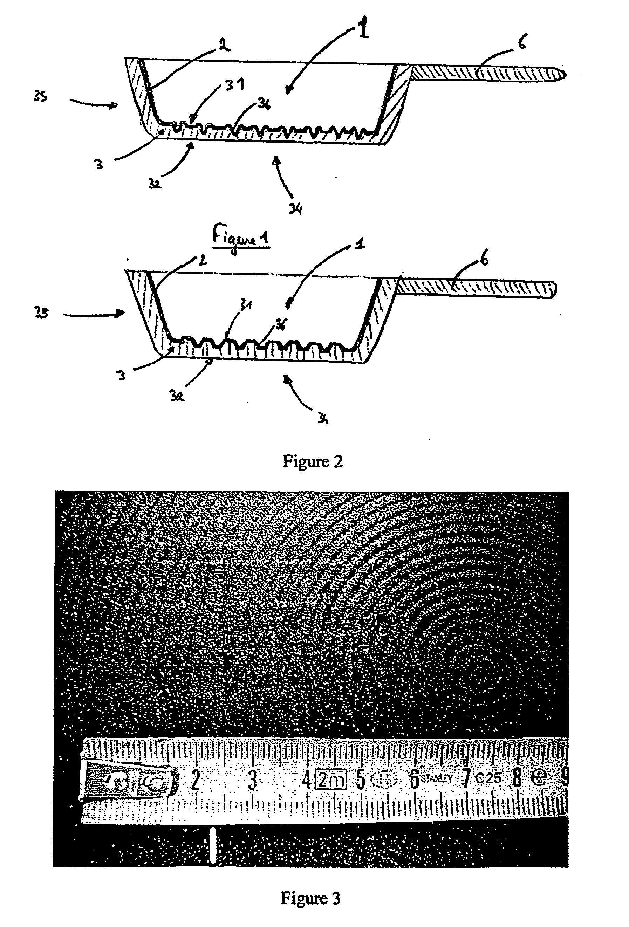

Les éléments identiques représentés sur les figures 1 à 7 sont identifiés par des références numériques identiques.

Sur les figures 1 et 2, on a représenté, à titre d'exemple d'article culinaire selon l'invention, une poêle 1 comprenant un support 3 se présentant sous forme de calotte creuse avec un fond 34 et une paroi latérale 35 s'élevant à partir du fond 34, et une poignée de préhension 6. Le support 3 comprend une face intérieure 31 pouvant recevoir des aliments, et une face extérieure 32 destinée à être disposée du côté de la source de chaleur, telle qu'une plaque de cuisson ou un brûleur.

La face intérieure 31 est revêtue d'un revêtement antiadhésif 2 de type vitreux conforme à l'invention.

Les figures 1 et 2 montrent que la face intérieure 31 est structurée macroscopiquement.

La figure 1 montre plus particulièrement que le relief structurant cette face intérieure 31 se présente sous forme de sillons 36 régulièrement espacés, et la figure 3 montre que ces sillons sont sous forme de cercles concentriques.

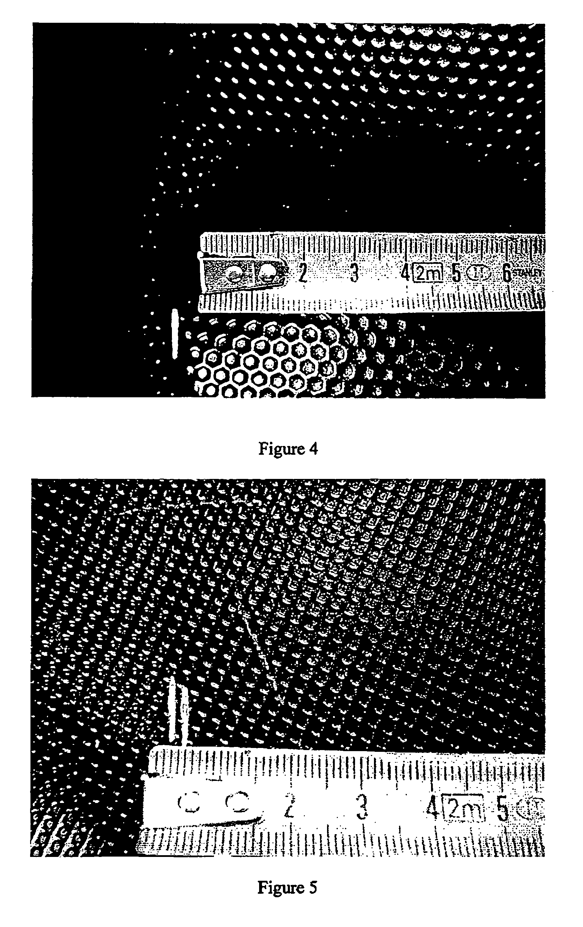

La figure 2 montre plus particulièrement que le relief structurant cette face intérieure 31 présente sous forme d'alvéoles et la figure 4 montre qu'elles sont arrangées sous forme de nids d'abeilles.

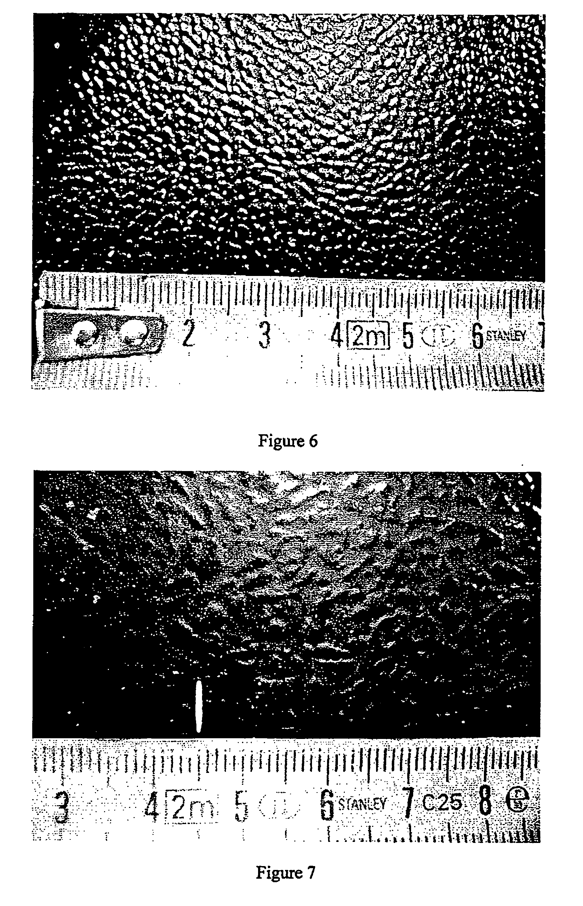

Dans les variantes illustrées sur les figures 5 à 7 on a présenté en forme en vue de dessus d'autres types de reliefs pouvant être utilisés pour structurer de façon macroscopique la surface intérieure 31 d'un article culinaire conforme à la présente invention :
- le relief de la face intérieure illustré sur la figure 5 est analogue à celui de la figure 4, mais en plus fin : nid d'abeilles fin,
- le relief illustré sur la figure 6 est du type « aspect cuir »,
- le relief illustré sur la figure 7 est du type « vallons éparses ».

Les exemples suivants illustrent l'invention sans toutefois en limiter la portée.

Dans les exemples, sauf indication contraire, toutes les quantités sont données en grammes.

### EXEMPLES

### Produits

### Composition aqueuse A

Oxyde métallique colloïdal : silice colloïdale sous forme de solution aqueuse à 30% de silice, commercialisée par la société Clariant sous la dénomination commerciale Klebosol®.

Solvant : isopropanol

Huile de silicone : huile méthyl silicone de grade alimentaire commercialisée par la société TEGO sous la dénomination commerciale TEGO® ZV 9207,

Pigment : pigment noir minéral commercialisé par la société Ferro sous la dénomination commerciale FA 1260,

Epaississant inorganique : silicate synthétique stratifié de sodium et de magnésium commercialisé par Rockwood sous la dénomination commerciale laponite® RD.

### Solution B

Précurseur : méthyltriéthoxysilane (MTMS) répondant à la formule Si (OCH₃)₃CH₃,

Acide :acide acétique

### Test

### Test de vieillissement accéléré de l'article culinaire par cuisson de manière intensive de divers aliments (pommes de terre, haricots, steaks, grillades et crêpes.

De manière régulière au cours de ce vieillissement accéléré, l'anti-adhérence est évaluée au moyen du test à l'oeuf conformément la norme NF D 21-511, et tel que décrit comme suit :
- la face intérieure d'un article culinaire est huilée avec une huile végétale à l'aide d'un tissu doux, avec une quantité d'huile de l'ordre de 2 cm³ d'huile pour une poêle de diamètre entre 240 mm et 280 mm ;
- puis, on nettoie l'article dans de l'eau chaude contenant du liquide vaisselle, puis on le rince d'abord à l'eau chaude puis à l'eau froide, et enfin on le sèche ;
- on contrôle ensuite la résistance à l'adhésion d'un oeuf cuit dans la poêle en procédant comme suit :
   ■ on place la poêle sur une plaque de chauffage de manière que sa surface intérieure soit chauffée jusqu'à une température entre 150°C et 170°C ;
   ■ on casse un oeuf et on le fait cuire au centre de la poêle, sans ajout de matière grasse, pendant 8 à 9 minutes ;
   ■ quand l'oeuf est cuit, on l'enlève à l'aide d'une spatule ;
   ■ puis on laisse la poêle refroidir à température ambiante ; et
   ■ on nettoie la poêle à l'aide d'une éponge humide.

Les propriétés d'anti-adhérence sont liées à la facilité avec laquelle il est possible d'éliminer les résidus d'oeuf, conformément aux opérations précédentes et selon l'échelle de valeurs suivante :.
■ on attribue 100 points si l'oeuf entier se détache avec un simple petit coup de poignée,
■ on attribue 50 points si l'oeuf entier se détache simplement à l'aide d'une spatule sans laisser de résidus,
■ on attribue 25 points si les résidus d'oeuf se détachent par frottement avec une éponge humide,
■ on attribue 0 point si les résidus d'oeuf ne s'enlèvent pas avec l'éponge humide.

### EXEMPLE 1 : préparation d'une composition aqueuse A à base de silice colloïdale.

On a réalisé une composition aqueuse A à base de silice colloïdale, qui est présentée dans le tableau 1 :

| ***Constituants de la partie A*** | ***Quantité (g)*** |
|---|---|
| solution aqueuse à 30% de silice colloïdale : Klebosol® | 42 |
| Eau | 16 |
| Isopropanol | 8 |
| Pigment noir FA 1220 | 32,5 |
| Huile silicone TEGO ZV 9207 | 1 |
| LAPONITE® RD | 0,5 |
| **TOTAL** | **100** |

### EXEMPLE 2 : préparation d'une solution selon à base de MTMS.

On réalise une B en mélangeant 59,4 g de MTMS à 0,6 g d'acide acétique, donnant une solution à 1% en poids d'acide dans le MTMS.

### EXEMPLE 3 préparation d'une composition sol-gel SG selon l'invention

On réalise une première composition sol-gel SG selon l'invention en ajoutant, à 100 g de composition aqueuse A selon l'invention, 60 g de solution B. On mélange, dans un mélangeur planétaire pendant une heure en conservant une température inférieure à 60°C, à l'issue de laquelle on obtient une composition sol-gel selon l'invention SG qui est conservée à température ambiante. La composition SG est laissée à maturer pendant 24 heures à température ambiante après mélange, avant application sur un support.

### EXEMPLE 4 : réalisation d'un article culinaire selon l'invention (face intérieure avec relief).

On utilise comme support une pièce présentant la forme finale d'une poêle 1, avec une face intérieure 31 concave destinée à être disposée du côté des aliments susceptibles d'être introduits dans l'article et une face extérieure 32 convexe destinée à être disposée du côté d'une source de chaleur.

Par une opération de frappe, on crée à la surface de la face intérieure 31 du support un relief macroscopique, tel que l'un de ceux représentés sur les figures 1 à 7.

Puis, on applique au pistolet, sur la face intérieure 31 du support la composition sol-gel SG de l'exemple 3, selon le cycle suivant :
- application sur le support d'une couche de composition sol-gel SG de l'exemple 3, avec une épaisseur humide de 40 à 70 microns,
- séchage pendant 3 minutes à 80°C, et
- refroidissement à la température ambiante.

Il est possible d'appliquer plusieurs fois ce cycle, le nombre de cycles étant déterminé par l'épaisseur finale souhaitée.

A l'issue du ou des cycles d'application/séchage, on étuve pendant 15 minutes à 270°C. On obtient alors un revêtement présentant une épaisseur sèche comprise entre 30 et 70 microns, et qui est lisse, noir et brillant.

### EXEMPLE 5 : réalisation d'un article culinaire témoin (face intérieure sans relief).

On utilise comme support le même que celui de l'exemple 7, hormis le fait que la face intérieure 31 n'est pas soumise à une opération de frappe destinée à la structure et reste lisse.

Puis, pour le dépôt de la composition sol-gel SG de l'exemple 5 sur la face intérieure 31 lisse, on procède de la même manière qu'à l'exemple 4.

### EXEMPLE 6 : Test de cuisson.

On réalise des cycles de cuisson intensive de plusieurs aliments (pommes de terre, haricots, steaks, grillades, crêpes).

Entre chaque cycle de cuisson, on contrôle l'anti-adhérence par le test à l'oeuf selon la norme NF D21-511.

Les résultats des tests à l'oeuf réalisés, obtenus d'une part avec la poêle de l'exemple 4 (avec relief) et d'autre part avec celle de l'exemple 5 (sans relief), sont récapitulés dans le tableau 2 ci-après.

**Tableau 2**

| | Résultats du test à l'oeuf | |
|---|---|---|
| | après 2 cycles de cuisson | après 3 cycles de cuisson |
| Article selon l'invention avec relief macroscopique (exemple 4) | 50 | 25 |
| Article de l'art antérieur (exemple 5) avec surface lisse | 0 | 0 |

Les résultats présentés dans le tableau 2 montrent que la création d'un relief macroscopique sur la surface de la face intérieure permet d'améliorer les propriétés d'anti-adhérence de revêtement, et ce, de manière durable.

## Revendications

1. Article culinaire (1) présentant des propriétés hydrophobes améliorées, comprenant un support (3) présentant une face intérieure (31) pouvant recevoir des aliments et une face extérieure (32) destinée à être disposée vers la source de chaleur, ladite face intérieure (31) étant revêtue d'un revêtement antiadhésif (2) de type vitreux et exempt de PTFE,
**caractérisé en ce que** :
- ledit revêtement antiadhésif (2) se présente sous forme d'un film continu ayant une épaisseur d'au moins 10 µm et constitué d'un matériau sol-gel comprenant une matrice d'au moins un polyalcoxylate métallique et au moins 5% en poids par rapport au poids total du revêtement d'au moins une oxyde métallique dispersé dans ladite matrice, et 0,01% à 10% en poids d'au moins un épaississant inorganique par rapport au poids total du revêtement,
- ladite face intérieure (31) du support (3) est structurée macroscopiquement et présente un relief avec des variations locales du niveau de sa surface d'une ampleur variant de 100 µm à 5000 µm.

2. Article culinaire (1) selon la revendication 1, **caractérisé en ce que** le relief comprend une pluralité de nervures régulièrement espacées.

3. Article culinaire (1) selon la revendication 1, **caractérisé en ce que** le relief comporte une pluralité d'alvéoles.

4. Article culinaire (1) selon l'une quelconque des revendications précédentes, **caractérisé en ce que** le polyalcoxylate métallique est un polyalcoxysilane.

5. Article culinaire (1) selon l'une quelconque des revendications 1 à 3, **caractérisé en ce que** le polyalcoxylate métallique est un aluminate.

6. Article culinaire (1) selon l'une quelconque des revendications 1 à 3, **caractérisé en ce que** le matériau sol-gel comprend une matrice mixte de polyalcoxysilane et d'aluminate.

7. Article culinaire (1) selon l'une quelconque des revendications précédentes, **caractérisé en ce que** l'oxyde métallique est un oxyde métallique colloïdal choisi dans le groupe constitué de la silice, l'alumine, l'oxyde de cérium, l'oxyde de zinc, l'oxyde de vanadium, l'oxyde de titane et l'oxyde de zirconium.

8. Article (1) selon l'une quelconque des revendications précédentes, **caractérisé en ce que** le matériau sol-gel constitutif dudit revêtement antiadhésif (2) comprend en outre au moins une huile de silicone, de préférence choisie parmi les méthyl-phényl silicones et les méthyl silicones.

9. Article (1) selon la revendication 8, **caractérisé en ce que** l'huile de silicone représente 0,1 à 6% en poids du poids total du revêtement (2).

10. Article (1) selon l'une quelconque des revendications précédentes, **caractérisé en ce que** le matériau sol-gel comprend en outre au moins une charge et/ou au moins un pigment, qui sont de préférence sous forme de paillettes, et/ou de taille nanométrique.

11. Article (1) selon l'une quelconque des revendications précédentes, **caractérisé en ce que** le film a une épaisseur comprise entre 10 et 80 µm.

12. Procédé de fabrication d'un article culinaire (1), **caractérisé en ce qu'**il comprend les étapes suivantes :
a) fourniture d'un support (3) avec une première face (31) destinée à constituer la face intérieure dudit article (1), et une face opposée à ladite face intérieure (31) et destinée à constituer la face extérieure dudit article;
b) création d'un relief macroscopique sur ladite première face (31) de manière à créer des variations du niveau de la surface pour obtenir une face intérieure (31) structurée macroscopiquement ;
c) préparation d'une composition sol-gel comprenant :
c1) préparation d'une composition aqueuse A comprenant 5 à 30% en poids par rapport au poids total de la composition aqueuse A d'au moins un oxyde métallique, 0 à 20% en poids par rapport au poids de la composition A d'un solvant comprenant au moins un alcool, et 0,02 à 20 % en poids d'au moins un épaississant inorganique par rapport au poids de la composition aqueuse A ;
c2) préparation d'une solution B comprenant au moins un précurseur de type alcoxyde métallique ;
c3) mélange de la solution B d'alcoxyde métallique avec la composition aqueuse A pour obtenir une composition sol-gel (A+B) avec 40 à 75% en poids de composition aqueuse A par rapport au poids de la composition sol-gel (A+B), de manière que la quantité d'oxyde métallique représente 5 à 30% poids de la composition sol-gel (A+B) à l'état sec ;
d) application sur tout ou partie de la face intérieure (31) du support (3) d'au moins une couche de la composition sol-gel (A+B) ayant une épaisseur d'au moins 20 µm à l'état humide, puis
e) cuisson de ladite couche de composition sol-gel pour obtenir un revêtement vitreux d'au moins 10 µm d'épaisseur.

13. Procédé selon la revendication 12, **caractérisé en ce que** le relief comprend une pluralité de nervures ou d'alvéoles dont la profondeur est comprise entre 100 µm et 5 mm.

14. Procédé selon la revendication 12 ou 13, **caractérisé en ce que** l'oxyde métallique est un oxyde métallique colloïdal choisi dans le groupe constitué de la silice, l'alumine, l'oxyde de cérium, l'oxyde de zinc, l'oxyde de vanadium, l'oxyde de titane et l'oxyde de zirconium.

15. Procédé selon l'une quelconque des revendications 12 à 14, **caractérisé en ce que** la composition aqueuse A comprend en outre au moins une huile de silicone.

16. Procédé selon l'une quelconque des revendications 12 à 15, **caractérisé en ce que** la composition aqueuse A comprend en outre au moins une charge et/ou au moins un pigment, de préférence sous forme de paillettes.

17. Procédé selon l'une quelconque des revendications 12 à 16, **caractérisé en ce que** le précurseur de type alcoxyde métallique de la solution B est choisi dans le groupe constitué par :
- les précurseurs répondant à la formule générale M₁(OR₁)ₙ,
- les précurseurs répondant à la formule générale M₂(OR₂)₍ₙ₋₁₎R₂', et
- les précurseurs répondant à la formule générale M₃(OR₃)₍ₙ₋₂₎R₃'₂,
avec :
R₁, R₂, R₃ ou R₃' désignant un groupement alkyle,
R₂' désignant un groupement alkyle, phényle,
n étant un nombre entier correspondant à la valence maximale des métaux M₁, M₂ ou M₃
M₁ M₂ ou M₃ désignant un métal choisi parmi Si, Zr, Ti, Sn, Al, Ce, Nb Hf, Mg ou Ln.

18. Procédé selon la revendication 17, **caractérisé en ce que** l'alcoxyde métallique est un alcoxysilane, de préférence choisi parmi le méthyltriméthoxysilane (MTMS) et le tétraéthoxysilane (TEOS).

19. Procédé selon l'une quelconque des revendications 12 à 18, **caractérisé en ce que** l'on applique sur la face intérieure (31) structurée du support (3) deux couches de la composition sol-gel, pour obtenir une épaisseur de couche après cuisson de 30 à 70 µm.

## Claims

1. A culinary article (1) exhibiting improved hydrophobic properties, comprising a substrate (3) having an internal side (31) capable of receiving foods and an external side (32) to be arranged towards the heat source, said internal side (31) being coated with a PTFE-free non-stick coating (2) of vitreous type,
**characterized in that**:
- said non-stick coating (2) is formed as a continuous film having a thickness of at least 10 µm and constituted of a sol-gel material comprising a matrix of at least a metal polyalcoxylate and at least 5% by weight with respect to the total weight of the coating of at least a metal oxide dispersed in said matrix, and 0.01% to 10% by weight of at least an inorganic thickening agent with respect to the total weight of the coating,
- said internal side (31) of the substrate (3) is macroscopically structured and exhibits a relief with local variations at its surface in a magnitude varying from 100 µm to 5000 µm.

2. The culinary article (1) according to claim 1, **characterized in that** the relief comprises a plurality of regularly spaced ribs.

3. The culinary article (1) according to claim 1, **characterized in that** the relief comprises a plurality of cells.

4. The culinary article (1) according to any one of the preceding claims, **characterized in that** the metal polyalcoxylate is a polyalkoxysilane.

5. The culinary article (1) according to any one of claims 1 to 3, **characterized in that** the metal polyalcoxylate is an aluminate.

6. The culinary article (1) according to any one of claims 1 to 3, **characterized in that** the sol-gel material comprises a mixed matrix of polyalkoxysilane and aluminate.

7. The culinary article (1) according to any one of the preceding claims, **characterized in that** the metal oxide is a colloidal metal oxide selected from the group consisting in silica, alumina, cerium oxide, zinc oxide, vanadium oxide, titanium oxide and zirconium oxide.

8. The article (1) according to any one of the preceding claims, **characterized in that** the sol-gel material constituting said non-stick coating (2) further comprises at least one silicone oil, that is preferably selected from methyl-phenyl silicones and methyl silicones.

9. The article (1) according to claim 8, **characterized in that** the silicone oil represents 0.1 to 6% by weight of the total weight of the coating (2).

10. The article (1) according to any one of the preceding claims, **characterized in that** the sol-gel material further comprises at least one filler and/or at least one pigment, that are preferably in the form of flakes, and /or of nanometric size.

11. The article (1) according to any one of the preceding claims, **characterized in that** the film has a thickness comprised between 10 and 80 µm.

12. A method for manufacturing a culinary article (1), **characterized in that** it comprises the following steps of:
a) providing a substrate (3) with a first side (31) to constitute the internal side of said article (1), and a side opposite to said internal side (31) and for forming the external side of said article;
b) creating a macroscopic relief on said first side (31) such as to create variations at the surface in order to obtain a macroscopically structured internal side (31);
c) preparing a sol-gel composition comprising:
c1) preparing an aqueous composition A comprising 5 to 30% by weight with respect to the total weight of the aqueous composition A of at least a metal oxide, 0 to 20% by weight with respect to the weight of composition A of a solvent comprising at least an alcohol, and 0.02 to 20% by weight of at least an inorganic thickening agent with respect to the weight of aqueous composition A;
c2) preparing a solution B comprising at least a metal alkoxide type precursor;
c3) mixing solution B of metal alkoxide with the aqueous solution A in order to obtain a sol-gel composition (A+B) with 40 to 75% by weight of aqueous composition A with respect to the weight of the sol-gel composition (A+B), such that the quantity of metal oxide represents 5 to 30% by weight of the sol-gel composition (A+B) on a dry basis;
d) applying on the entirety or on part of the internal side (31) of the substrate (3) of at least a layer of the sol-gel composition (A+B) having a thickness of at least 20 µm on a wet basis,
then
e) curing said sol-gel composition layer in order to obtain a vitreous coating of at least a 10 µm thickness.

13. The method according to claim 12, **characterized in that** the relief comprises a plurality of ribs or cells the depth of which is comprised between 100 µm and 5 mm.

14. The method according to claim 12 or 13, **characterized in that** the metal oxide is a colloidal metal oxide selected from the group consisting in silica, alumina, cerium oxide, zinc oxide, vanadium oxide, titanium oxide and zirconium oxide.

15. The method according to any one of claims 12 to 14, **characterized in that** the aqueous composition A further comprises at least one silicone oil.

16. The method according to any one of claims 12 to 17, **characterized in that** the aqueous composition A further comprises at least one filler and/or at least one pigment, preferably in the form of flakes.

17. The method according to any one of claims 12 to 16, **characterized in that** the precursor of metal alkoxide type of solution B is selected from the group constituted of:
- precursors whose general formula is M₁ (OR₁)ₙ,
- precursors whose general formula is M₂ (OR₂) ₍ₙ₋₁₎ R₂', and
- precursors whose general formula is M₃ (OR₃) ₍ₙ₋₂₎ R₃'₂, with:
R₁, R₂, R₃ or R₃' designating an alkyl group,
R₂' designating an alkyl or phenyl group,
n being an integer corresponding to the maximum valence of metals M₁, M₂ or M₃.
M₁, M₂ or M₃ designating a metal selected from Si, Zr, Ti, Sn, Ce, V, Nb, Hf, Mg or Ln,

18. The method according to claim 17, **characterized in that** the metal alkoxide is an alkoxysilane, preferably selected from methyl trimethoxysilane (MTMS), and tetraethoxysilane (TEOS).

19. The method according to any one of claims 12 to 18, **characterized in that** on the structured internal side (31) of substrate (3) two layers of the sol-gel composition are applied, so as to obtain, after curing, a layer thickness of 30 to 70 µm.

## Patentansprüche

1. Kulinarischer Artikel (1) mit verbesserten wasserabweisenden Eigenschaften, umfassend einen Träger (3) mit einer Innenfläche (31), die Nahrungsmittel aufnehmen kann, und einer Außenfläche (32), die dazu bestimmt ist, in Richtung der Wärmequelle angeordnet zu werden, wobei die Innenfläche (31) mit einer PTFEfreien, glasartigen, antihaftenden Schicht (2) beschichtet ist,
**dadurch gekennzeichnet, dass** :
- die antihaftende Schicht (2) in Form eines kontinuierlichen Films mit einer Dicke von mindestens 10 µm vorliegt und von einem Sol-Gel-Werkstoff gebildet wird, umfassend eine Matrix aus mindestens einem Metallpolyalkoxylat und mindestens 5 Gewichtsprozenten bezogen auf das Gesamtgewicht der Beschichtung eines in der Matrix dispergierten Metalloxids, sowie 0,01 bis 10 Gewichtsprozenten bezogen auf das Gesamtgewicht der Beschichtung mindestens eines anorganischen Verdickungsmittels,
- die Innenfläche (31) des Trägers (3) makroskopisch strukturiert ist und ein Relief mit örtlichen Variationen im Bereich ihrer Oberfläche aufweist mit einer von 100 µm bis 5000 µm schwankenden Dicke.

2. Kulinarischer Artikel (1) nach Anspruch 1, **dadurch gekennzeichnet, dass** das Relief eine Vielzahl gleichmäßig entfernter Rippen umfasst.

3. Kulinarischer Artikel (1) nach Anspruch 1, **dadurch gekennzeichnet, dass** das Relief eine Vielzahl von Alveolen enthält.

4. Kulinarischer Artikel (1) nach einem der vorhergehenden Ansprüche, **dadurch gekennzeichnet, dass** das Metallpolyalkoxylat ein Polyalkoxysilan ist.

5. Kulinarischer Artikel (1) nach einem der Ansprüche 1 bis 3, **dadurch gekennzeichnet, dass** das Metallpolyalkoxylat ein Aluminat ist.

6. Kulinarischer Artikel (1) nach einem der Ansprüche 1 bis 3, **dadurch gekennzeichnet, dass** der Sol-Gel-Werkstoff eine Mischmatrix aus Polyalkoxysilan und Aluminat umfasst.

7. Kulinarischer Artikel (1) nach einem der vorhergehenden Ansprüche, **dadurch gekennzeichnet, dass** das Metalloxid ein kolloidales Metalloxid ist aus der Gruppe gewählt, die aus Siliziumdioxid, Aluminiumoxid, Ceroxid, Zinkoxid, Vanadiumoxid, Titanoxid und Zirconiumoxid besteht.

8. Artikel (1) nach einem der vorhergehenden Ansprüche, **dadurch gekennzeichnet, dass** der besagte antihaftende Beschichtung (2) bildende Sol-Gel-Werkstoff ferner mindestens ein Silikonöl enthält, vorzugsweise unter den Methylphenylsilikonen und den Methylsilikonen ausgewählt.

9. Artikel (1) nach Anspruch 8, **dadurch gekennzeichnet, dass** das Silikonöl 0,1 bis 6 Gewichtsprozente des Gesamtgewichts der Beschichtung (2) darstellt.

10. Artikel (1) nach einem der vorhergehenden Ansprüche, **dadurch gekennzeichnet, dass** der Sol-Gel-Werkstoff ferner mindestens eine Beimengung und/oder mindestens ein Pigment umfasst, die vorzugsweise in Form von Spänen und/oder in Nanogröße vorliegen.

11. Artikel (1) nach einem der vorhergehenden Ansprüche, **dadurch gekennzeichnet, dass** der Film eine Dicke zwischen 10 und 80 µm aufweist.

12. Verfahren zur Herstellung eines kulinarischen Artikels (1), **dadurch gekennzeichnet, dass** es folgende Schritte umfasst:
a) Bereitstellung eines Trägers (3) mit einer ersten Fläche (31), dazu bestimmt, die Innenfläche des Artikels (1) zu bilden, und einer der Innenfläche (31) gegenüberliegenden Fläche, dazu bestimmt, die Außenfläche des Artikels zu bilden;
b) Schaffung eines makroskopischen Reliefs auf der ersten Fläche (31) um Variationen im Bereich der Oberfläche zu schaffen, um eine makroskopisch strukturierte Innenfläche (31) zu erhalten ;
c) Zubereitung einer Sol-Gel-Zusammensetzung umfassend :
c1) Zubereitung einer wässrigen Zusammensetzung A umfassend 5 bis 30 Gewichtsprozente bezogen auf das Gesamtgewicht der wässrigen Zusammensetzung A mindestens eines Metalloxids, 0 bis 20 Gewichtsprozente bezogen auf das Gewicht der Zusammensetzung A eines mindestens einen Alkohol enthaltenden Lösungsmittels, und 0,02 bis 20 Gewichtsprozente mindestens eines anorganischen Verdickungsmittels bezogen auf das Gewicht der wässrigen Zusammensetzung A ;
c2) Zubereitung einer Lösung B, die mindestens einen Ausgangsstoff des Typs Metallalkoxid umfasst;
c3) Mischung der Lösung B des Metallalkoxids mit der wässrigen Zusammensetzung A, um eine Sol-Gel-Zusammensetzung (A+B) zu erhalten mit 40 bis 75 Gewichtsprozenten der wässrigen Zusammensetzung A bezogen auf das Gewicht der Sol-Gel-Zusammensetzung (A+B), so dass die Menge des Metalloxids 5 bis 30 Gewichtsprozente der Sol-Gel-Zusammensetzung (A+B) im Trockenzustand darstellt ;
d) Aufbringen auf die gesamte oder einen Teil der Innenfläche (31) des Trägers (3) von mindestens einer Schicht der Sol-Gel-Zusammensetzung (A+B) mit einer Dicke von mindestens 20 µm im feuchten Zustand, dann
e) Brennen der Sol-Gel-Zusammensetzung, um eine glasartige Beschichtung mit einer Dicke von mindestens 10 µm zu erhalten.

13. Verfahren nach Anspruch 12, **dadurch gekennzeichnet, dass** das Relief eine Vielzahl von Rippen oder Alveolen umfasst, deren Tiefe zwischen 100 µm und 5 mm beträgt.

14. Verfahren nach Anspruch 12 oder 13, **dadurch gekennzeichnet, dass** das Metalloxid ein kolloidales Metalloxid ist aus der Gruppe gewählt, die aus Siliziumdioxid, Aluminiumoxid, Ceroxid, Zinkoxid, Vanadiumoxid, Titanoxid und Zirconiumoxid besteht.

15. Verfahren nach einem der Ansprüche 12 bis 14, **dadurch gekennzeichnet, dass** die wässrige Zusammensetzung A ferner mindestens ein Silikonöl umfasst.

16. Verfahren nach einem der Ansprüche 12 bis 15, **dadurch gekennzeichnet, dass** die wässrige Zusammensetzung A ferner mindestens eine Beimengung und/oder mindestens ein Pigment vorzugsweise in Form von Spänen umfasst.

17. Verfahren nach einem der Ansprüche 12 bis 16, **dadurch gekennzeichnet, dass** der Ausgangsstoff des Typs Metallalkoxid der Lösung B aus der Gruppe gewählt wird, die aus folgenden besteht:
- die Ausgangsstoffe mit der allgemeinen Formel M₁(OR₁)ₙ,
- die Ausgangsstoffe mit der allgemeinen Formel M₂(OR₂)₍ₙ₋₁₎R₂', und
- die Ausgangsstoffe mit der allgemeinen Formel M₃(OR₃)₍ₙ₋₂₎R₃'₂,
wobei:
R₁, R₂, R₃ oder R₃' eine Alkylgruppe bezeichnen,
R₂' eine Alkylgruppe, eine Phenylgruppe bezeichnen,
n eine ganze, der Maximalwertigkeit der Metalle M₁, M₂ oder M₃ entsprechende Zahl ist,
M₁ M₂ oder M₃ ein Metall bezeichnen ausgewählt unter Si, Zr, Ti, Sn, Al, Ce, Nb Hf, Mg oder Ln.

18. Verfahren nach Anspruch 17, **dadurch gekennzeichnet, dass** das Metallalkoxid ein Alkoxysilan ist, vorzugsweise ausgewählt unter Methyltrimethoxysilan (MTMS) und Tetraethoxysilan (TEOS).

19. Verfahren nach einem der Ansprüche 12 bis 18, **dadurch gekennzeichnet, dass** auf die strukturierte Innenfläche(31) des Trägers (3) zwei Schichten der Sol-Gel-Zusammensetzung aufgebracht werden, um nach dem Härten eine Schichtdicke von 30 bis 70 µm zu erhalten.
